# EUROPÄISCHE PATENTSCHRIFT

(11) **EP 3 587 044 B1**
(45) Veröffentlichungstag und Bekanntmachung des Hinweises auf die Patenterteilung: **19.05.2021**
(21) Anmeldenummer: 18180277.8
(22) Anmeldetag: 28.06.2018
(51) Int. Cl.: B25J 9/16

(54) **VERFAHREN ZUM GREIFEN VON OBJEKTEN IN EINEM SUCHBEREICH UND POSITIONIERSYSTEM**
METHOD FOR GRIPPING OBJECTS IN A SEARCH AREA AND POSITIONING SYSTEM
PROCÉDÉ DE PRÉHENSION D'OBJETS DANS UNE ZONE DE RECHERCHE ET SYSTÈME DE POSITIONNEMENT

(43) Veröffentlichungstag der Anmeldung: 01.01.2020
(73) Patentinhaber: SICK AG, 79183 Waldkirch (DE)
(72) Erfinder: RISCH, Wolfgang, 79224 Umkirch (DE); LANG, Felix, 79418 Schliengen (DE)
(74) Vertreter: Manitz Finsterwald Patent- und Rechtsanwaltspartnerschaft mbB

(56) Entgegenhaltungen:
- WO-A2-03/064116
- US-A- 5 083 073
- US-A1- 2011 026 833
- Danica Kragic ET AL: "Survey on Visual Servoing for Manipulation", , 1 January 2002 (2002-01-01), pages 1-58, XP055623004, Retrieved from the Internet: URL:https://pdfs.semanticscholar.org/16a7/ 1f602a103a7ba29658999ddde75a0f2a3848.pdf?_ ga=2.196260076.13178199.1568722723-1901962 003.1551875288 [retrieved on 2019-09-17]

## Beschreibung

Die vorliegende Erfindung betrifft ein Verfahren zum Greifen von Objekten in einem Suchbereich mittels eines Roboters, wobei der Roboter eine Kinematik umfasst, an welcher eine Greifvorrichtung zum Greifen eines Objekts angeordnet ist. Die Erfindung betrifft ferner eine Steuereinheit für einen Roboter, welche zur Durchführung des Verfahrens eingerichtet ist, und ein Positioniersystem mit einer derartigen Steuereinheit.

Bei Montage- und Fertigungsverfahren in automatisierten Fertigungsstraßen ist es erforderlich, Objekte oder Werkstücke, die montiert, bearbeitet oder verarbeitet werden sollen, zunächst von einer Zufuhreinrichtung, beispielsweise einem Bandsystem oder einer anderen Fördereinrichtung aufzunehmen ("pick") und dieses Objekt für einen nachfolgenden Verarbeitungsschritt an einem anderen Ort abzulegen oder in einer Montageposition zu halten ("place"). Dabei sind die Art und die Lage der Objekte nicht immer bekannt. Damit ein zu positionierendes Objekt zuverlässig aufgenommen werden kann, ist es erforderlich, dass die Position und Lage des Objekts in einem Suchbereich bekannt ist, damit eine Greifvorrichtung so positioniert werden kann, dass diese das Objekt an einer vorgegebenen Stelle definiert greifen kann, um es anschließend dem nachfolgenden Verarbeitungsschritt mit der erforderlichen Genauigkeit zuführen zu können.

Im Rahmen dieses Textes wird unter der Position eines Objekts bzw. eines Abbilds eines Objekts der Ort des Objektes bzw. des Abbildes des Objektes innerhalb eines jeweiligen Koordinatensystems verstanden (beispielsweise bezogen auf einen Schwerpunkt des Objekts), während unter der Lage eines Objekts bzw. eines Abbildes eines Objektes in dem Koordinatensystem dessen räumliche Ausrichtung oder Orientierung innerhalb des Koordinatensystems verstanden wird.

Eine einfache Lösung zum Greifen von Objekten bedient sich einer Kette von mechanischen Einrichtungen zur Ausrichtung der Objekte und einer einfachen Sensorik zu deren Sortierung. Die mechanischen Einrichtungen und die Sensorik sind dabei genau auf die zu verarbeitenden Objekte angepasst. Ein typisches Beispiel für eine derartige Lösung ist beispielsweise die Zuführung von Flaschen für eine Flaschenfüllanlage. Die Flaschen werden von einem Stauband schrittweise vereinzelt, so dass am Ende dieses Vorgangs eine einzelne Flasche in einer Spur einer Fülleinheit zugeführt werden kann.

Eine weitergehende Lösung bedient sich einer Kombination aus einer mechanischen Aufbereitung und einer an einem Roboter angeordneten Greifvorrichtung, wobei das Auffinden eines Objekts und das Ansteuern des Roboters bzw. der Greifvorrichtung kamerabasiert erfolgen. Bei bekannten Systemen wird z.B. eine ausreichend große Anzahl von Objekten oder Werkstücken in ein Sichtfeld oder einen Suchbereich einer ortsfesten Kamera gebracht. Dabei kann die Position bzw. die Lage der Werkstücke durch Rütteln oder dergleichen zufällig variiert werden, bis sich mindestens ein zum Greifen geeignetes Werkstück im Suchbereich der Kamera befindet. In der Regel erfolgt eine Beleuchtung des Suchbereichs im Durchlicht, da dies die Bildverarbeitung erheblich erleichtert. Ein Zusammenhang zwischen den Koordinaten eines Objekts in einem von der Kamera erzeugten Bild und einem Koordinatensystem des Roboters, welches auch als Roboter- oder Weltkoordinatensystem bezeichnet wird, wird durch eine vorgängige Kalibration ermittelt, so dass von einem Bildverarbeitungssystem die Koordinaten eines zu greifenden Werkstücks in Form von Weltkoordinaten bereitgestellt werden können. Die vorstehend genannten mechanischen Einrichtungen können prinzipbedingt lediglich Werkstücke anhand ihrer Kontur ausrichten, wobei diese Kontur hinreichend einfach sein muss, wie es beim Beispiel der Flaschenvereinzelung gegeben ist. Toleranzen der Werkstücke können jedoch kaum berücksichtigt werden, da in der Regel eine Greifposition durch mechanische Anschläge definiert ist und daher abweichende Abmessungen eines Objekts zu einem fehlerhaften Greifvorgang führen können. Weiterhin müssen die mechanischen Einrichtungen speziell auf die zu greifenden Objekte eingerichtet werden, wobei bei einer Umstellung auf andere Objektformen oder -größen umfangreiche Umbaumaßnahmen erforderlich sein können.

Bei einem kamerabasierten Greifen können viele dieser Nachteile vermieden werden, insbesondere ist eine Umstellung auf andere Objekte einfacher zu lösen. Bei Systemen, bei denen der Suchbereich durchleuchtet wird (hintergrundbeleuchtete Systeme), besteht allerdings eine erhöhte Anfälligkeit gegenüber Verschmutzung, welche durch ein Rütteln der Objekte oder Werkstücke noch verstärkt wird.

Ein Verfahren und ein System zum Position eines Objekts mittels eines Industrieroboters ist in WO 2009/083452 A1 beschrieben, wobei zwei stationäre, jedoch ausrichtbare Kameras zur 3D-basierten Objekterkennung eingesetzt werden, deren jeweilige Ausrichtung über Winkelmessvorrichtungen erfasst wird.

WO 03/064116 A2 beschreibt ein Verfahren für eine dreidimensionale Handhabung eines Objekts durch einen Roboter unter Verwendung einer an einem Roboterarm montierten Kamera, wobei zunächst eine Kalibration der Kamera relativ zu einem Werkzeug des Roboters durchgeführt wird. In einem Bild werden Merkmale eines Objekts sowie darauf basierend die dreidimensionale Lage des Objekts ermittelt, wobei diese Information zur Ansteuerung des Roboters zur Durchführung von Handlungen an dem Objekt verwendet wird. Für die Objekterkennung ist ein Einlernen von Objektmerkmalen erforderlich, wobei das Objekt hierfür in einen "training space" verbracht wird, mindestens drei sichtbare Merkmale des Objekts bzw. des Objektbildes identifiziert werden und deren 3D-Position innerhalb des "training space" berechnet wird. Der "training space" besitzt entsprechende Markierungen, die es ermöglichen, die Positionen der Objektmerkmale zu ermitteln.

Danica Kragic et al "Survey on Visual Servoing for Manipulation" offenbart ein allgemeines Prinzip des "visual servoing". Es werden verschiedene Konfigurationen der Kamerapositionierung vorgestellt. Die meisten Techniker verwenden Vorkenntnisse des zu erkennenden Objekts. Basierend auf erkannten "Merkmalen" des Objekts wird die Position des Objekts bestimmt.

Es ist die Aufgabe der Erfindung, ein Verfahren zum Greifen von Objekten sowie eine entsprechende Steuereinheit und ein entsprechendes Positioniersystem anzugeben, welche gegenüber herkömmlichen Verfahren bzw. Systemen verbessert sind.

Die Lösung erfolgt durch ein Verfahren und ein Positioniersystem mit den Merkmalen der jeweiligen unabhängigen Ansprüche. Vorteilhafte Ausgestaltungen und Weiterbildungen des Verfahrens, der Steuereinheit und des

Positioniersystems sind in den abhängigen Ansprüchen angegeben, wobei Vorteile, die sich im Zusammenhang mit vorteilhaften Ausgestaltungen des erfindungsgemäßen Verfahrens ergeben, auch als vorteilhafte Weiterbildungen der Steuereinheit bzw. des Positioniersystems anzusehen sind und umgekehrt.

Die vorliegende Erfindung stellt ein Verfahren zum Greifen von Objekten in einem Suchbereich mittels eines in einem Weltkoordinatensystem kalibrierten Roboters bereit, wobei der Roboter eine Kinematik umfasst, wobei an der Kinematik eine Greifvorrichtung zum Greifen eines Objekts und eine Kamera zum Erfassen von zweidimensionalen Bildern zumindest eines Teilbereichs des Suchbereichs angeordnet ist, wobei der Suchbereich mehrere Markierungen aufweist, welche ein Suchbereichskoordinatensystem definieren und welche dazu vorgesehen sind, perspektivische Verzerrungen in einem Bild des Suchbereichs zu ermitteln, wobei in einem vorgeschalteten ersten Kalibrationsschritt auf der Grundlage eines Referenzbildes des Suchbereichs eine erste Transformationsfunktion ermittelt wird, welche das Suchbereichskoordinatensystem in das Weltkoordinatensystem überführt. Das Verfahren umfasst ein Ausrichten der Kamera auf den Suchbereich, ein Aufnahmen eines zweidimensionalen Bildes des Suchbereichs, ein Entzerren des Bildes auf der Grundlage von in dem Bild aufgenommenen Markierungen, ein Ermitteln der Position und Lage eines in dem entzerrten Bild vorhandenen Abbilds eines identifizierten Objekts in einem Bildkoordinatensystem, ein Ermitteln der Position und Lage des Objekts in dem Suchbereichskoordinatensystem auf der Grundlage der Position und Lage des Abbildes des Objekts in dem Bildkoordinatensystem und auf der Grundlage von Abbildern der Markierungen, ein Ermitteln der Position und Lage des Objekts in dem Weltkoordinatensystem auf der Grundlage der Position und Lage des Objekts in dem Suchbereichskoordinatensystem und auf der Grundlage der ersten Transformationsfunktion, und ein Ansteuern der Kinematik zum Bewegen der Greifvorrichtung in eine Greifstellung, in welcher ein Ergreifen des identifizierten Objekts durch die Greifvorrichtung erfolgt, auf der Grundlage der Position und Lage des Objekts in dem Weltkoordinatensystem, wobei zumindest einer der Schritte, welche das Aufnehmen des Bildes, das Entzerren des Bildes, das Ermitteln der Position und Lage in dem Bild-, Suchbereichs- und/oder Weltkoordinatensystem umfassen, während einer Bewegung der Kinematik durchgeführt wird, wobei wahrend des Bewegens der Greifvorrichtung mehrere Iterationen durchgeführt werden, wobei eine jeweilige Iteration zumindest das Aufnehmens eines Bildes umfasst.

Im Unterschied zu einem herkömmlichen Verfahren ist die Kamera nicht stationär auf einen Suchbereich ausgerichtet, in dem die zu greifenden Objekte bereitgehalten werden, sondern an der Kinematik, d.h. an einem Arm des Roboters, angeordnet. Dadurch kann die Kamera zugleich auch für weitere Zwecke verwendet werden. So kann sie beispielsweise nicht nur den Greifvorgang überwachen, sondern zugleich auch beim Ablegen oder Positionieren eines ergriffenen Objekts ("place") eingesetzt werden. Ein weiterer Vorteil besteht darin, dass ein oder mehrere Schritte, die zum Auffinden eines Objekts in dem Suchbereich erforderlich sind, während einer Bewegung des Roboters durchgeführt werden. Insbesondere das Aufnehmen des Bildes des Suchbereichs wird während der Bewegung durchgeführt. Vorteilhafterweise werden auch weitere Bildverarbeitungs- und Auswerteschritte während dieser Bewegung ausgeführt. Dadurch verkürzt sich die Zeit, die zum Greifen eines Objekts einschließlich der benötigten Zeit für die Annäherung der Greifvorrichtung an das Objekt erforderlich ist, erheblich, so dass die gesamte Fertigung oder Verarbeitung erheblich beschleunigt werden kann.

Die Greifvorrichtung kann beispielsweise als mechanischer oder pneumatischer Greifer (Fingergreifer oder Sauggreifer) ausgebildet sein.

Unter einem Bewegen der Greifvorrichtung wird ein Ändern der Position und/oder der Lage (Ausrichtung) der Greifvorrichtung zum Annähern an den Suchbereich verstanden. Der eigentliche Greifvorgang, beispielsweise ein Schließen der Finger oder ein Betätigen der Saugvorrichtung, ist von dem genannten Bewegen der Greifvorrichtung noch nicht umfasst.

In der Greifstellung ist ein Greifbereich der Greifvorrichtung hinsichtlich seiner Position und Lage so auf die Position und Lage des Objekts ausgerichtet, dass nachfolgend nur noch die Greifvorrichtung betätigt werden muss, d.h. der eigentliche Greifvorgang ausgelöst werden muss, um das Objekt zu greifen.

Bevorzugt ist genau eine Kamera vorgesehen. Hierdurch ergibt sich gegenüber bekannten Lösungen, bei denen beispielsweise dreidimensionale Bildgebungssysteme mit mehreren stereoskopischen Kameras zum Einsatz gelangen, ein deutlicher Vorteil hinsichtlich des Kosten- und Konfigurationsaufwands. Aufwändige Einmessprozeduren können entfallen. Zudem können stereoskopische Kamerasysteme oder allgemein Kamerasysteme mit mehreren Kameras aus Gewichtsgründen gar nicht am Roboter bzw. dessen Kinematik selbst angeordnet werden.

Nachfolgend wird der Ablauf des erfindungsgemäßen Verfahrens näher erläutert. Zunächst werden ein oder mehrere zu greifende Objekte in dem Suchbereich bereitgestellt. Der Suchbereich kann beispielsweise eine ebene, insbesondere horizontale Fläche umfassen. Damit zu greifende Objekte aufgefunden werden können, ist es erforderlich, die Kamera auf den Suchbereich auszurichten. In dem von der Kamera aufgenommenen zweidimensionalen Bild des Suchbereichs können durch grundsätzlich bekannte Bildverarbeitungsverfahren Objekte erkannt und deren Position und Lage in dem Bild ermittelt werden. Hierfür ist es gegebenenfalls erforderlich, die Gestalt des oder der zu greifenden Objekte dem Bildverarbeitungssystem im Rahmen eines Einlernvorgangs vorab bekannt zu machen. Die Position und Lage eines Objekts kann hierbei nur zunächst bezogen auf ein Bildkoordinatensystem ermittelt werden, welches auf die Reihen und Spalten der einzelnen Bildpunkte (Pixel) des Bildes Bezug nimmt. Da die Kamera beweglich ist, kann aus der Position und Lage eines Objekts im Bildkoordinatensystem alleine noch kein Rückschluss auf die Position und Lage des Objekts im Weltkoordinatensystem gezogen werden.

Um ein Greifen des Objekts mittels der Greifvorrichtung zu ermöglichen, muss die Position und Lage der Greifvorrichtung der Position und Lage des Objekts entsprechen. Die Position und Lage einer an einem Roboter angeordneten Greifvorrichtung wird vorzugsweise raumbezogen über den so genannten TCP (von Englisch: "Tool Center Point") beschrieben. Dies ist ein gedachter Referenzpunkt, der sich an geeigneter Stelle an einem Roboterwerkzeug befindet. Um zu beschreiben, welche Position und Lage das Roboterwerkzeug einnehmen soll, werden die Position des TCP im Raum und seine Lage, d.h. seine Ausrichtung oder Verdrehung, definiert. Insbesondere mittels einer sogenannten Denavit-Hartenberg-Transformation kann von der Robotersteuerung errechnet werden, welche Stellung die einzelnen Roboterachsen einnehmen müssen, so dass das Roboterwerkzeug die vorgegebene Position und Lage einnimmt. Die Position und Lage der Greifvorrichtung mit ihrem TCP bezieht sich insbesondere auf ein Weltkoordinatensystem, welches auf den Raum, in welchem der Roboter aufgestellt ist, oder eine Basis des Roboters direkt oder indirekt bezogen ist. Selbstverständlich muss es sich bei den Weltkoordinaten nicht um ein absolutes Weltsystem handeln, sondern dieses System kann auch einem anderen System untergeordnet sein. Es handelt sich also hierbei um ein Koordinatensystem, das innerhalb des Prozesses ein übergeordnetes Bezugssystem bildet. Das Weltkoordinatensystem ist meist mit dem Boden einer Prozesshalle, einem Prozessraum oder einer Prozesszelle gekoppelt.

Ein weiteres Koordinatensystem wird durch die Markierungen im Suchbereich definiert, nämlich das Suchbereichskoordinatensystem. Da der Suchbereich an geeigneter Stelle in der Umgebung des Roboters angeordnet sein kann, kann das Suchbereichskoordinatensystem translatorisch und/oder rotatorisch gegenüber dem Weltkoordinatensystem verschoben sein. Um den Zusammenhang zwischen dem Suchbereichskoordinatensystem und dem Weltkoordinatensystem herzustellen, muss vorgängig während des ersten Kalibrationsschritts die genannte erste Transformationsfunktion ermittelt werden. Dies kann beispielsweise dadurch erfolgen, dass zumindest für einen Teil der im Suchbereich vorhandenen Markierungen die jeweiligen zugehörigen Koordinaten im Weltkoordinatensystem ermittelt werden. Wenn nun die Relativposition und Relativlage eines Objekts in Bezug auf die Markierungen im Suchbereich bekannt ist, kann auf der Grundlage der ersten Transformationsfunktion in bekannter Weise die Position und Lage des Objekts im Weltkoordinatensystem errechnet werden.

Da die Kamera beweglich ist, kann der Zusammenhang zwischen dem Bildkoordinatensystem und dem Suchbereichskoordinatensystem variieren. Dieser Zusammenhang kann jedoch mit Hilfe der neben einem Abbild eines Objekts in dem Bild vorhandenen Abbilder der Markierungen des Suchbereichs ermittelt werden. Da allerdings das aufgenommene Bild des Suchbereichs in Abhängigkeit von dem Blickwinkel und dem Abstand der Kamera verzerrt sein kann, ist es sinnvoll, vor einer Ermittlung der Suchbereichskoordinaten das Bild zu entzerren. Dies kann ebenfalls auf der Grundlage der Markierungen erfolgen. Hierzu können beispielsweise die Abstände zwischen einzelnen Markierungen und/oder Winkel zwischen Linien (oder gedachten Verbindungslinien zwischen einzelnen Markierungen) berücksichtigt werden. Das Entzerren erfolgt demnach zumindest auf der Grundlage extrinsischer Kameraparameter wie dem Arbeitsabstand der Kamera und dem Blickwinkel der Kamera, d.h. dem Azimut und der Elevation der optischen Achse der Kamera in Bezug auf den Suchbereich. Hierzu geeignete Bildverarbeitungsverfahren sind allgemein bekannt. Aus einem entsprechend entzerrten Bild kann dann mit Hilfe der Abbilder der Markierungen, die als Bezugspunkte dienen, die Lage eines Abbildes eines Objekts im Bildkoordinatensystem ermittelt werden und nachfolgend in Suchbereichskoordinaten und schließlich in Weltkoordinaten umgerechnet werden.

Grundsätzlich ließe sich eine Entzerrung eines Bildes alternativ auch auf der Grundlage der Position und Lage der Kamera durchführen. Hierzu wäre es jedoch erforderlich, entsprechende Daten von der Kinematik des Roboters zu erhalten. Dies würde jedoch das Verfahren aufgrund der hierzu benötigten Schnittstellen deutlich komplizierter machen.

Erfindungsgemäß werden während des Bewegens der Greifvorrichtung mehrere Iterationen durchgeführt, wobei eine jeweilige Iteration zumindest das Aufnehmen eines Bildes umfasst. Während des Annäherns der Greifvorrichtung an den Suchbereich werden also fortlaufend Bilder aufgenommen und insbesondere ausgewertet, so dass auch dann die Greifvorrichtung an den Suchbereich angenähert wird, wenn zunächst noch kein Objekt identifiziert werden kann, beispielsweise weil noch keine geeigneten Objekte im Suchbereich vorhanden sind oder die gegenwärtige Perspektive für eine Objektidentifikation ungeeignet ist. Dadurch verzögert sich der übergeordnete Fertigungsprozess nicht.

Gemäß einer weiteren Ausgestaltung des Verfahrens ist die Kamera in Bezug auf einen Greifbereich der Greifvorrichtung lagefest an der Kinematik angeordnet, wobei insbesondere ein Erfassungsbereich der Kamera den Greifbereich der Greifvorrichtung umfasst. Unter dem Greifbereich wird, wie vorstehend bereits erläutert, ein Bereich verstanden, indem die Greifvorrichtung ein Objekt ergreifen kann. Durch diese Ausgestaltung wird sichergestellt, dass die Greifvorrichtung und die Kamera stets in die gleiche Richtung "blicken". Durch die Merkmale dieser Ausgestaltung wird jedoch nicht ausgeschlossen, dass sich einzelne Komponenten der Greifvorrichtung, z.B. Aktoren oder Finger, zum eigentlichen Greifen bewegen können, insbesondere auch relativ zu der Kamera. So kann beispielsweise eine Basis der Greifvorrichtung, welche die Finger trägt, lagefest zur Kamera angeordnet sein. Beispielsweise können die Greifvorrichtung und die Kamera an demselben Arm der Kinematik befestigt sein.

Vorteilhafterweise sind die Markierungen derart in dem Suchbereich angeordnet, dass auch für ein Bild, in welchem nur ein Teilbereich des Suchbereichs erfasst ist, ein Entzerren des Bildes durchführbar ist. Hierfür wird eine ausreichende Anzahl an Markierungen vorgesehen, welche insbesondere in Summe auch ein repetitives Muster ausbilden können, beispielsweise ein schachtbrettartiges Muster oder ein Gitternetzmuster. Grundsätzlich wäre aber auch eine Anordnung mit weniger Markierungen (z.B. drei) möglich.

Gemäß einer weiteren vorteilhaften Ausgestaltung des Verfahrens wird die Kamera in eine vorgegebene Wartestellung überführt und die Bewegung der Kinematik in der Wartestellung angehalten, wenn während eines vorgegebenen Zeitraums und/oder innerhalb eines vorgegebenen Verfahrbereichs kein Objekt identifiziert wurde und/oder ein vorgegebener Abstand zu dem Suchbereich erreicht oder unterschritten wurde. Der Verfahrbereich bzw. eine Trajektorie der Greifvorrichtung bzw. der Kamera können fest vorgegeben sein oder auf der Grundlage bestimmter Regeln jeweils neu ermittelt werden, beispielsweise ausgehend von einem jeweiligen Startpunkt, welcher einer Position entspricht, in der ein zuvor ergriffenes Objekt abgelegt wurde. Die Wartestellung befindet sich insbesondere in der Nähe des Suchbereichs, wobei die Kamera insbesondere senkrecht von oben auf den Suchbereich ausgerichtet sein kann. Während sich die Kamera in der Wartestellung befindet, kann beispielsweise die Lage der Objekte im Suchbereich durch Rütteln verändert werden oder es werden weitere Objekte zugeführt, so dass schließlich eine Identifizierung eines zum Greifen geeigneten Objekts möglich ist.

Vorteilhafterweise wird in der Wartestellung wiederholt solange ein Bild des Suchbereichs aufgenommen, bis ein Abbild eines Objekts identifiziert wird. Anschließend kann die Position und Lage des identifizierten Objekts in dem Weltkoordinatensystem ermittelt und die Greifvorrichtung in die Greifstellung für dieses Objekt bewegt werden.

Es hat sich als vorteilhaft erwiesen, wenn für die Wartestellung in einem vorgeschalteten zweiten Kalibrationsschritt auf der Grundlage eines Referenzbildes des Suchbereichs eine zweite Transformationsfunktion ermittelt wird, welche das Bildkoordinatensystem des nicht entzerrten Referenzbildes unmittelbar in das Weltkoordinatensystem überführt, wobei die Position und Lage eines in der Wartestellung erfassten Objekts in dem Weltkoordinatensystem unmittelbar auf der Grundlage des Abbildes eines identifizierten Objekts in dem Bildkoordinatensystem eines nicht entzerrten Bildes und auf der Grundlage der zweiten Transformationsfunktion ermittelt wird. Demnach ist keine separate Entzerrung des aufgenommenen Bildes anhand der Markierungen erforderlich. Gegebenenfalls notwendige Entzerrungen können im Rahmen des zweiten Kalibrationsschritts ermittelt werden und in der zweiten Transformationsfunktion bereits enthalten sein. Ein unmittelbares Ermitteln von Position und Lage in dem Weltkoordinatensystem bedeutet insbesondere, dass das Entzerren des Bildes auf der Grundlage der Markierungen und der Zwischenschritt der Positions- und Lageermittlung im Suchbereichskoordinatensystem übersprungen wird.

Mit den Bezeichnungen "erster Kalibrationsschritt" und "zweiter Kalibrationsschritt" wird keinesfalls eine Reihenfolge festgelegt, in welcher diese Kalibrationsschritte durchzuführen sind.

Gemäß noch einer weiteren vorteilhaften Ausgestaltung wird die Position des Objekts im Suchbereich in zwei Dimensionen innerhalb einer den Suchbereich definierenden Fläche, insbesondere Ebene, ermittelt, deren Position und Lage innerhalb des Weltkoordinatensystems während des ersten Kalibrationsschritts ermittelt oder erfasst wird. Mit anderen Worten liegt ein zu greifendes Objekt stets auf der Fläche bzw. Ebene des Suchbereichs auf. Die dritte Dimension der Objektposition ergibt sich aus der Position und Lage der Suchbereichsebene im Weltkoordinatensystem.

Vorteilhafterweise wird das Entzerren des Bildes zusätzlich auf der Grundlage von Verzeichnungen eines Objektivs der Kamera durchgeführt. Es werden also nicht nur extrinsische Kameraparameter, die perspektivische Verzerrungen oder Maßstabsänderungen zur Folge haben, sondern auch intrinsische Kameraparameter berücksichtigt, beispielsweise eine optische Verzeichnung durch das Kameraobjektiv. Eine gegebenenfalls notwendige Kalibrierung hinsichtlich der intrinsischen Kameraparameter kann zum Beispiel auch im Rahmen des ersten oder zweiten Kalibrationsschrittes oder in einem gesonderten vorgängigen Kalibrationsschritt erfolgen.

Bei dem genannten Roboter handelt es sich zum Beispiel um einen dezidierten Bestückungsroboter.

Es wird zudem ein Positioniersystem zumindest zum Greifen von Objekten in einem Suchbereich bereitgestellt, welches einen in einem Weltkoordinatensystem kalibrierten Roboter umfasst, wobei der Roboter eine Kinematik umfasst, wobei an der Kinematik eine Greifvorrichtung zum Greifen eines Objekts und eine Kamera zum Erfassen von zweidimensionalen Bildern zumindest eines Teilbereichs des Suchbereichs angeordnet ist, wobei der Suchbereich mehrere Markierungen aufweist, welche ein Suchbereichskoordinatensystem definieren und welche dazu vorgesehen sind, perspektivische Verzerrungen in einem Bild des Suchbereichs zu ermitteln. Das Positioniersystem umfasst ferner eine Steuereinheit, welche dazu eingerichtet ist, den Roboter zumindest zum Greifen von Objekten im Suchbereich gemäß dem Verfahren nach einer der vorher beschriebenen Ausgestaltungen anzusteuern.

Weitere vorteilhafte Ausgestaltungen des Verfahrens und vorteilhafte Ausführungsformen der Steuereinheit und des Positioniersystems ergeben sich aus den Unteransprüchen, der Beschreibung und den Zeichnungen.

Die Erfindung wird nachfolgend beispielhaft mit Bezug auf die Zeichnungen beschrieben.

Es zeigen:
- Fig. 1: eine schematische Ansicht eines Positioniersystems gemäß einem Ausführungsbeispiel,
- Fig. 2: eine schematische Darstellung des Zusammenhangs zwischen verschiedenen Koordinatensystemen, und
- Fig. 3a bis 3d: Bilder des Suchbereichs des Positioniersystems von Fig. 1, jeweils nach unterschiedlichen Bildverarbeitungsschritten.

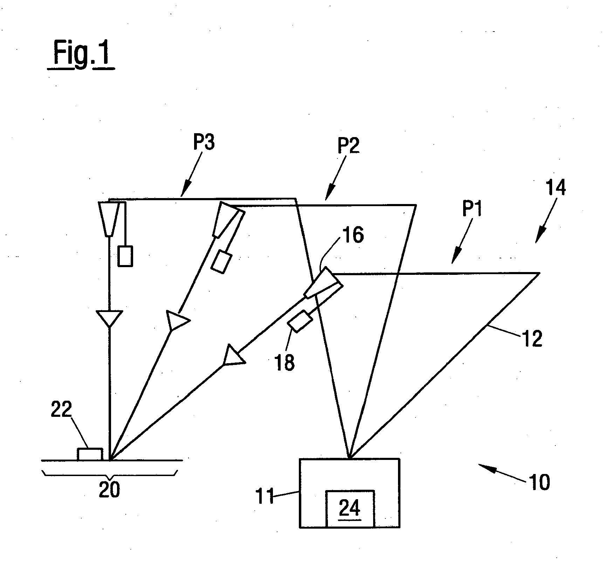

Fig. 1 zeigt ein Positioniersystem gemäß einem Ausführungsbeispiel, welches einen Roboter 10, insbesondere Bestückungsroboter, umfasst. Der Roboter 10 weist eine Basis 11 auf, an dem ein mehrteiliger beweglicher Roboterarm 12 angeordnet ist. An einem freien Ende des Roboterarms 12 ist eine Greifvorrichtung 18 und eine lagefest zur Greifvorrichtung 18 angeordnete Kamera 16 vorgesehen. Die Kamera 16 und die Greifvorrichtung 18 sind gemeinsam relativ zu dem Roboterarm 12 verstellbar. In der Basis 11 vorgesehene Antriebe zur Verstellung des dort angelenkten Roboterarms 12, Antriebe innerhalb des Roboterarms 12 sowie Antriebe zur Verstellung der Greifvorrichtung 18 bzw. der Kamera 16 bilden zusammen eine Kinematik 14.

Der Roboter 10 ist in einem Weltkoordinatensystem kalibriert, so dass die Position und Lage der Greifvorrichtung 18 in Koordinaten dieses Weltkoordinatensystems angegeben wird. Unter einem Weltkoordinatensystem wird insbesondere ein Koordinatensystem verstanden, in dem die Basis 11 des Roboters lagefest angeordnet ist. Es muss sich nicht zwingend um ein globales Koordinatensystem handeln, sondern kann beispielsweise auch auf eine Halle, einen Raum oder eine Zelle einer Fertigungsstätte bezogen sein.

In der Basis 11 ist eine Steuereinheit 24 integriert, welche dazu eingerichtet ist, zweidimensionale Bilder von der Kamera 16 zu empfangen und Steuerbefehle an die Kinematik 14 auszugeben. Die Steuereinheit 24 kann alternativ auch als externe Steuereinheit ausgebildet sein.

Die Kinematik 14 ist in verschiedenen Verstellpositionen P1 bis P3 dargestellt. In jeder Verstellposition P1 bis P3 wird die Kamera 16 und entsprechend auch die Greifvorrichtung 18 mittels der Kinematik 14 so ausgerichtet, dass die Kamera 16 mit ihrem Erfassungsbereich, welcher hier lediglich durch einen die optische Achse repräsentierenden Pfeil dargestellt ist, einen Suchbereich 20 erfasst, in welchem eine oder mehrere zu greifende Objekte 22 vorhanden sein können.

Während des Annäherns der Kamera 16 bzw. der Greifvorrichtung 18 an den Suchbereich 20 werden fortlaufend Bilder vom Suchbereich 20 aufgenommen, an die Steuereinheit 24 übermittelt und ausgewertet. Sobald ein Objekt 22 im Suchbereich 20 auch innerhalb eines Bildes identifiziert wurde, wird die Kinematik 14 so angesteuert, dass diese die Greifvorrichtung 18 an das Objekt 22 annähert, bis dieses in einen Greifbereich der Greifvorrichtung 18 gelangt. Anschließend wird die Greifvorrichtung 18 für den eigentlichen Greifvorgang aktiviert, d.h. in Abhängigkeit von der Bauart der Greifvorrichtung 18 werden z.B. die Finger eines Fingergreifers oder die Saugvorrichtung eines Sauggreifers aktiviert.

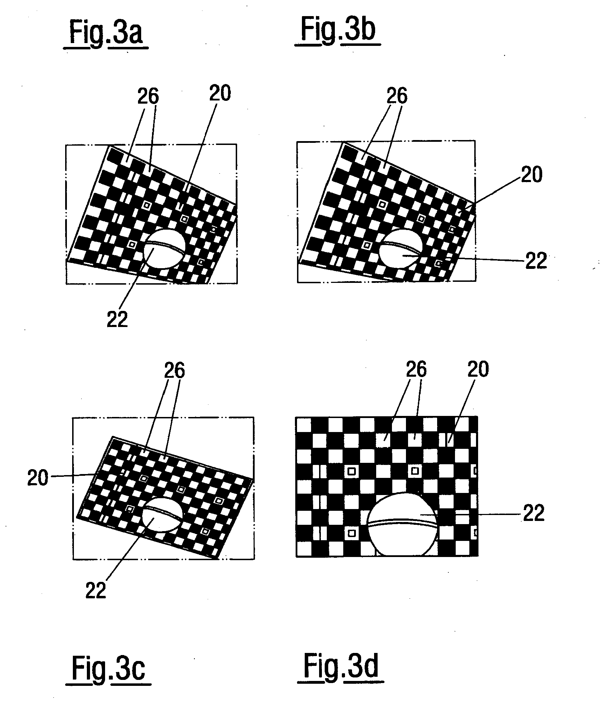

Der Suchbereich 20 weist gemäß Fig. 3a bis 3d eine Vielzahl von schachbrettartig angeordneten hellen Markierungen 26 auf, welche ein Suchbereichskoordinatensystem definieren. Ein Teil der Markierungen 26 kann zusätzlich kodiert sein, beispielsweise mithilfe von Barcodes oder QR-Codes, um eine eindeutige Identifizierung einer jeweiligen Markierung 26 und ihrer Koordinaten im Suchbereichskoordinatensystem zu ermöglichen.

Eine schachbrettartige Anordnung der Markierungen ist besonders eingängig. Es kann aber auch eine andere eindeutige Anordnung gewählt sein. Grundsätzlich können auch nur kodierte Markierungen vorgesehen sein oder nur ein Teil der Markierungen zur Definition des Suchbereichskoordinatensystems verwendet werden (zum Beispiel nur die kodierten Markierungen einer Anordnung, bei der nur ein Teil der Markierungen kodiert ist).

Im Suchbereich 20 befindet sich bei der Darstellung gemäß Fig. 3a bis 3d ein kreisförmiges Objekt 22, dessen Position und Lage in dem Bildkoordinatensystem, welches beispielsweise durch die Reihen- und Zeilennummer der betreffenden Pixel, in denen das Objekt 22 lokalisiert wird, angegeben werden kann. Als Referenzpunkt kann beispielsweise ein Schwerpunkt des Objekts 22 oder ein sonstiger Referenzpunkt, der mit Hilfe einer Referenzaufnahme eines jeweiligen zu identifizierenden Objekts 22 festgelegt werden kann, angegeben werden.

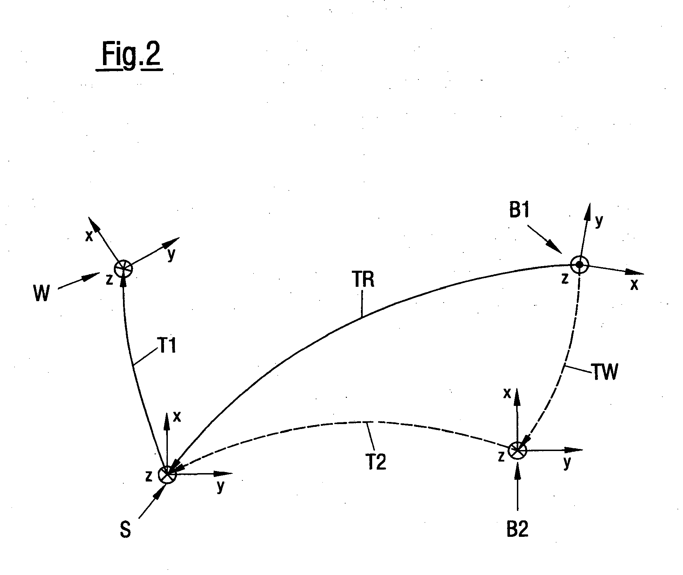

Der Zusammenhang zwischen den verschiedenen Koordinatensystemen wird mit Bezug auf Fig. 2 verdeutlicht. Die Markierungen 26 definieren ein Suchbereichskoordinatensystem S, dessen Lage in dem Weltkoordinatensystem W durch eine erste Transformationsfunktion T1 beschrieben wird, welche in Fig. 2 durch einen Pfeil mit durchgezogener Linie repräsentiert wird. Die erste Transformationsfunktion T1, die das Suchbereichskoordinatensystem S in das Weltkoordinatensystem W überführt, kann in einem vorgeschalteten ersten Kalibrationsschritt auf der Grundlage eines Referenzbildes des Suchbereichs 20 ermittelt werden. Die Lage eines Objekts 22 in einem von der Kamera 16 erzeugten Abbild des Suchbereichs 20 wird durch ein Bildkoordinatensystem B1 definiert.

Die Kamera 16 wird auf einer Trajektorie TR an den Suchbereich 20 angenähert, welche in Fig. 2 ebenfalls durch einen Pfeil mit durchgezogener Linie repräsentiert wird. Die Lage des Bildkoordinatensystems B1 ändert sich beim Durchlaufen dieser Trajektorie TR ständig. Eine Angabe einer Transformationsfunktion, welche den Zusammenhang zwischen dem Bildkoordinatensystem B1 und dem Suchbereichskoordinatensystem S bzw. dem Weltkoordinatensystem W in analytischer Weise herstellen würde, wäre sehr aufwändig und zudem nicht besonders präzise, da hierbei auf entsprechende Messwertgeber des Roboters 10 zurückgegriffen werden müsste. Stattdessen wird bei dem erfindungsgemäßen Verfahren der Zusammenhang zwischen dem Bildkoordinatensystem B1 und dem Suchkoordinatensystem S auf der Grundlage der in einem aufgenommenen Bild erfassten Markierungen 26 hergestellt.

Wenn während des Annäherns der Kamera 16 auf der Trajektorie TR kein Objekt erkannt wurde, wird die Kamera 16 in eine vorgegebene Wartestellung überführt und die Kinematik 14 dann angehalten. Der Übergang in die Wartestellung ist durch eine Bahnkurve TW (Pfeil mit gestrichelter Linie) repräsentiert.

In einem vorgängigen zweiten Kalibrationsschritt ist für diese hinsichtlich ihrer Position und Lage fest definierte Wartestellung ein Referenzbild des Suchbereichs aufgenommen worden. Das Koordinatensystem für in der Wartestellung aufgenommene Bilder wird als Bildkoordinatensystem B2 bezeichnet. Der Zusammenhang zwischen dem Bildkoordinatensystem B2 und dem Weltkoordinatensystem W wird durch eine zweite Transformationsfunktion T2 hergestellt (weiterer Pfeil mit gestrichelter Linie), wobei die zweite Transformationsfunktion T2 insbesondere auch etwaige Verzerrungen und/oder Verzeichnungen in dem Bild berücksichtigen kann, was nachfolgend noch näher erläutert wird.

Mit Bezug auf Fig. 3 werden nun die Schritte zur Auswertung eines von der Kamera 16 aufgenommenen Bildes des Suchbereichs 20 näher erläutert. Fig. 3a zeigt zunächst ein Rohbild oder nicht entzerrtes Bild des Suchbereichs 20 mit dem kreisförmigen Objekt 22. In einem ersten Schritt wird eine Entzerrung des Rohbildes durchgeführt, welche intrinsische Kameraparameter umfasst, wobei hier insbesondere eine Verzeichnung eines Objektivs der Kamera 16 korrigiert wird. Die entsprechende Transformationsfunktion kann beispielsweise auf der Grundlage eines geeigneten Referenzmusters (nicht dargestellt) ermittelt werden, welches vorgängig unter definierten Abbildungsbedingungen aufgenommen wurde. Das so korrigierte Bild ist in Fig. 3b dargestellt.

In einem weiteren Bildverarbeitungsschritt wird das Bild gemäß Fig. 3b um perspektivische, d.h. blickwinkelabhängige Verzerrungen korrigiert. Das Ergebnis ist in Fig. 3c dargestellt. Wie gut zu erkennen ist verlaufen die in Fig. 3b schräg zueinander verlaufenden Begrenzungslinien des schachbrettartigen Referenzmusters nunmehr parallel zueinander.

In einem nächsten Entzerrungsschritt wird das Bild von Fig. 3c ausgerichtet und zur Berücksichtigung unterschiedlicher Abstände oder Objektweiten in seiner Größe skaliert, so dass die Markierungen 26 eine vorgegebene Position in dem Bildkoordinatensystem B1 aufweisen, d.h. eine bestimmte Markierung 26 stets die gleiche Position in dem Bildkoordinatensystem B1 aufweist und auch die Abstände verschiedener Markierungen 26 zueinander jeweils den gleichen Wert aufweisen. Ein entsprechendes vollständig entzerrtes Bild ist in Fig. 3d dargestellt.

Letztendlich soll also ein vollständig entzerrtes Bild des Suchbereichs 20 abgesehen von ggf. vorhandenen Objekten immer ähnlich aussehen wie das Bild von Fig. 3d, unabhängig von der Perspektive oder Kameraposition, von der aus es aufgenommen wurde.

Auf der Grundlage der Markierungen 26 in dem Bild 3d kann die Position des Objekts 22 im Bildkoordinatensystem B1 durch einfache lineare Operationen auf der Grundlage der Position der Markierungen 26 in Suchbereichskoordinaten umgerechnet werden. Eine weitere Umrechnung in das Weltkoordinatensystem W erfolgt anschließend auf der Grundlage der vorgängig ermittelten ersten Transformationsfunktion T1.

Die auf diese Weise ermittelte Position und Lage des Objekts in dem Weltkoordinatensystem W wird nachfolgend an den Roboter 10 übermittelt, welcher dann die Greifvorrichtung 18 unmittelbar in die Greifstellung entsprechend den Objektkoordinaten versetzt. Anschließend kann das Ergreifen des Objekts 22 durch die Greifvorrichtung 18 erfolgen.

Wenn eine Identifizierung eines Objekts 22 in den Bildern, die während des Annäherns auf der Trajektorie TR aufgenommen wurden, nicht möglich ist, kann auf der Grundlage eines vorgegebenen Kriteriums nunmehr die Wartestellung angefahren werden. Das vorgegebene Kriterium kann beispielsweise den Ablauf einer bestimmten Zeit nach dem Starten der Kinematik 14, das Zurücklegen eines bestimmten Verfahrwegs der Kamera 16 bzw. der Greifvorrichtung auf der Trajektorie TR oder das Erreichen eines vorgegebenen Mindestabstands zum Suchbereich 20 umfassen.

Die Wartestellung kann beispielsweise der Verstellposition P3 (Fig. 1) entsprechen, in welcher die Kamera 16 von oben auf den Suchbereich 20 blickt. In der Wartestellung können solange Bilder des Suchbereichs 20 aufgenommen werden, bis ein Objekt 22 identifiziert werden kann. Die Lage des Bildkoordinatensystems B2 für die Wartestellung wurde bereits im Rahmen des zweiten Kalibrationsschritts ermittelt, so dass die Position und Lage des Objekts 22 im Weltkoordinatensystem W unmittelbar, d.h. ohne zwischengeschaltete Entzerrungsschritte auf der Grundlage des Abbilds des Objekts 20 in dem Bildkoordinatensystem B2 und auf der Grundlage der zweiten Transformationsfunktion T2 ermittelt werden kann, wobei keine Markierungen 26 im Bild sichtbar sein müssen bzw. die Markierungen 26 nicht berücksichtigt werden.

Ein Vorteil des hier beschriebenen Verfahrens besteht darin, dass die Bildverarbeitung und Bildauswertung parallel zu einer Annäherungsbewegung des Roboters 10 an den Suchbereich 20 erfolgt. Zudem kann der Verlauf der Trajektorie TR frühzeitig angepasst werden, beispielsweise wenn bereits am Anfang der Annäherungsbewegung ein zu ergreifendes Objekt 22 identifiziert werden konnte.

Wenn der vorstehend beschriebene "Pick"-Vorgang abgeschlossen wurde, kann das von der Greifvorrichtung 18 ergriffene Objekt 22 im Rahmen eines nachfolgenden "Place"-Vorgangs an seinem Bestimmungsort abgelegt werden oder in einer Montage- oder Verarbeitungsstellung gehalten oder weiterverarbeitet werden.

Während des Place-Vorgangs kann die Kamera 16 für weitere zusätzliche Bildauswertungen im Hinblick auf das gegriffene Objekt 22 eingesetzt werden. Auf Grundlage dieser Bildauswertungen kann beispielsweise eine Feinpositionierung, eine Lagekontrolle oder auch eine Qualitätskontrolle des Objekts 22 durchgeführt werden.

Das erfindungsgemäße Verfahren bzw. die erfindungsgemäße Steuereinheit 24 liefert über einen Bildverarbeitungsalgorithmus die Koordinaten eines aufzunehmenden Objekts in einem zur unmittelbaren Ansteuerung des Roboters 10 geeigneten Weltkoordinatensystem W, ohne dass die Komplexität des gesamten Positioniersystems wesentlich erhöht wird. Durch die zeitliche Verschmelzung oder Verzahnung der Bewegung der Greifvorrichtung 18 auf geeigneten Bahnkurven oder Trajektorien sowie der Bildverarbeitung, insbesondere der Bildentzerrung, können dadurch Objekte in einem für die Roboteransteuerung geeigneten Koordinatensystem mit hoher Geschwindigkeit lokalisiert werden. Eine Synchronisation der Bahnkurvensteuerung des Roboters 10 und der Bildverarbeitung ist prinzipiell nicht erforderlich.

Die Steuereinheit 24 bzw. ein aus Steuereinheit 24 und Kamera 16 bestehendes System kann als separates sensorisches System mit einem bereits vorhandenen Roboter 10 gekoppelt werden.

### Bezugszeichenliste

- 10: Roboter
- 11: Basis
- 12: Roboterarm
- 14: Kinematik
- 16: Kamera
- 18: Greifvorrichtung
- 20: Suchbereich
- 22: Objekt
- 24: Steuereinheit
- 26: Markierung
- P1 - P3: Verstellposition
- B1, B2: Bildkoordinatensystem
- S: Suchbereichskoordinatensystem
- W: Weltkoordinatensystem
- T1: erste Transformationsfunktion
- T2: zweite Transformationsfunktion
- TR: Trajektorie
- TW: Bahnkurve

## Patentansprüche

1. Verfahren zum Greifen von Objekten (22) in einem Suchbereich (20) mittels eines in einem Weltkoordinatensystem (W) kalibrierten Roboters (10), wobei der Roboter (10) eine Kinematik (14) umfasst, wobei an der Kinematik (14) eine Greifvorrichtung (18) zum Greifen eines Objekts (22) und eine Kamera (16) zum Erfassen von zweidimensionalen Bildern zumindest eines Teilbereichs des Suchbereichs (20) angeordnet ist, wobei der Suchbereich (20) mehrere Markierungen (26) aufweist, welche ein Suchbereichskoordinatensystem (S) definieren und welche dazu vorgesehen sind, perspektivische Verzerrungen in einem Bild des Suchbereichs (20) zu ermitteln, wobei in einem vorgeschalteten ersten Kalibrationsschritt auf der Grundlage eines Referenzbildes des Suchbereichs (20) eine erste Transformationsfunktion (T1) ermittelt wird, welche das Suchbereichskoordinatensystem (S) in das Weltkoordinatensystem (W) überführt, wobei das Verfahren umfasst:
Ausrichten der Kamera (16) auf den Suchbereich (20),
Aufnehmen eines zweidimensionalen Bildes des Suchbereichs,
Entzerren des Bildes auf der Grundlage von in dem Bild aufgenommenen Markierungen (26),
Ermitteln der Position und Lage eines in dem entzerrten Bild vorhandenen Abbilds eines identifizierten Objekts (22) in einem Bildkoordinatensystem (B1, B2),
Ermitteln der Position und Lage des Objekts (22) in dem Suchbereichskoordinatensystem (S) auf der Grundlage der Position und Lage des Abbilds des Objekts (22) in dem Bildkoordinatensystem (B1, B2) und auf der Grundlage von Abbildern der Markierungen (26),
Ermitteln der Position und Lage des Objekts (22) in dem Weltkoordinatensystem (W) auf der Grundlage der Position und Lage des Objekts (22) in dem Suchbereichskoordinatensystem (S) und auf der Grundlage der ersten Transformationsfunktion (T1), und
Ansteuern der Kinematik (14) zum Bewegen der Greifvorrichtung (18) in eine Greifstellung, in welcher ein Ergreifen des identifizierten Objekts (22) durch die Greifvorrichtung (18) erfolgt, auf der Grundlage der Position und Lage des Objekts (22) in dem Weltkoordinatensystem (W), wobei zumindest einer der Schritte, welche das Aufnehmen des Bildes, das Entzerren des Bildes, das Ermitteln der Position und Lage in dem Bild-, Suchbereichs- und/oder Weltkoordinatensystem (B1, B2, S, W) umfassen, während einer Bewegung der Kinematik (14) durchgeführt wird,
wobei während des Bewegens der Greifvorrichtung (18) mehrere Iterationen durchgeführt werden, wobei eine jeweilige Iteration zumindest das Aufnehmens eines Bildes umfasst.

2. Verfahren nach Anspruch 1,
**dadurch gekennzeichnet,**
**dass** die Kamera (16) in Bezug auf einen Greifbereich der Greifvorrichtung (18) lagefest an der Kinematik (14) angeordnet ist, wobei insbesondere ein Erfassungsbereich der Kamera (16) den Greifbereich der Greifvorrichtung (18) umfasst.

3. Verfahren nach einem der vorhergehenden Ansprüche,
**dadurch gekennzeichnet,**
**dass** die Kamera (16) in eine vorgegebene Wartestellung überführt wird und die Bewegung der Kinematik (14) in der Wartestellung angehalten wird, wenn während eines vorgegebenen Zeitraums und/oder innerhalb eines vorgegebenen Verfahrbereichs kein Objekt (22) identifiziert wurde.

4. Verfahren nach Anspruch 3,
**dadurch gekennzeichnet,**
**dass** in der Wartestellung wiederholt solange ein Bild des Suchbereichs (20) aufgenommen wird, bis ein Abbild eines Objekts (22) identifiziert wird.

5. Verfahren nach Anspruch 4,
**dadurch gekennzeichnet,**
**dass** für die Wartestellung in einem vorgeschalteten zweiten Kalibrationsschritt auf der Grundlage eines Referenzbildes des Suchbereichs (20) eine zweite Transformationsfunktion (T2) ermittelt wird, welche das Bildkoordinatensystem (B1, B2) des nicht entzerrten Referenzbildes unmittelbar in das Weltkoordinatensystem (W) überführt, und
**dass** die Position und Lage eines in der Wartestellung erfassten Objekts (22) in dem Weltkoordinatensystem (W) unmittelbar auf der Grundlage des Abbilds eines identifizierten Objekts (22) in dem Bildkoordinatensystem (B1, B2) eines nicht entzerrten Bildes und auf der Grundlage der zweiten Transformationsfunktion (T2) ermittelt wird.

6. Verfahren nach einem der vorhergehenden Ansprüche,
**dadurch gekennzeichnet,**
**dass** die Position des Objektes im Suchbereich (20) in zwei Dimensionen innerhalb einer den Suchbereich (20) definierenden Fläche, insbesondere Ebene, ermittelt wird, deren Position und Lage innerhalb des Weltkoordinatensystems (W) während des ersten Kalibrationsschritts ermittelt oder erfasst wird.

7. Verfahren nach einem der vorhergehenden Ansprüche,
**dadurch gekennzeichnet,**
**dass** das Entzerren des Bildes zusätzlich auf der Grundlage von Verzeichnungen eines Objektivs der Kamera (16) durchgeführt wird.

8. Verfahren nach einem der vorhergehenden Ansprüche,
**dadurch gekennzeichnet,**
**dass** der Roboter (10) ein Bestückungsroboter ist.

9. Positioniersystem zumindest zum Greifen von Objekten (22) in einem Suchbereich (20), mit einem in einem Weltkoordinatensystem (W) kalibrierten Roboter (10), wobei der Roboter (10) eine Kinematik (14) umfasst, wobei an der Kinematik (14) eine Greifvorrichtung (18) zum Greifen eines Objekts (22) und eine Kamera (16) zum Erfassen von zweidimensionalen Bildern zumindest eines Teilbereichs des Suchbereichs (20) angeordnet ist, wobei der Suchbereich (20) mehrere Markierungen (26) aufweist, welche ein Suchbereichskoordinatensystem (S) definieren und welche dazu vorgesehen sind, perspektivische Verzerrungen in einem Bild des Suchbereichs (20) zu ermitteln, und mit einer Steuereinheit (24), welche dazu eingerichtet ist, den Roboter zumindest zum Greifen von Objekten im Suchbereich gemäß dem Verfahren nach einem der vorhergehenden Ansprüche anzusteuern.

## Claims

1. A method of gripping objects (22) in a search zone (20) by means of a robot (10) calibrated in a world coordinate system (W), wherein the robot (10) comprises a kinematic unit (14), wherein a gripping apparatus (18) for gripping an object (22) and a camera (16) for capturing two-dimensional images at least of a part zone of the search zone (20) are arranged at the kinematic unit (14), wherein the search zone (20) has a plurality of markings (26) which define a search zone coordinate system (S) and which are provided to determine perspective distortions in an image of the search zone (20), wherein, in a preceding first calibration step, a first transformation function (T1) is determined on the basis of a reference image of the search zone (20), said first transformation function (T1) transforming the search zone coordinate system (S) into the world coordinate system (W), wherein the method comprises:
aligning the camera (16) with the search zone (20);
recording a two-dimensional image of the search zone;
equalizing the image on the basis of markings (26) recorded in the image;
determining the position and location of an image of an identified object (22), which is present in the equalized image, in an image coordinate system (B1, B2);
determining the position and location of the object (22) in the search zone coordinate system (S) on the basis of the position and location of the image of the object (22) in the image coordinate system (B1, B2) and on the basis of images of the markings (26);
determining the position and location of the object (22) in the world coordinate system (W) on the basis of the position and location of the object (22) in the search zone coordinate system (S) and on the basis of the first transformation function (T1); and
activating the kinematic unit (14) to move the gripping apparatus (18) into a gripping position, in which a gripping of the identified object (22) by the gripping apparatus (18) takes place, on the basis of the position and
location of the object (22) in the world coordinate system (W), wherein, during a movement of the kinematic unit (14), at least one of the steps is performed that comprise recording the image, equalizing the image and determining the position and location in the image coordinate system, search zone coordinate system and/or world coordinate system (B1, B2, S, W),
wherein a plurality of iterations are performed during the movement of the gripping apparatus (18), with a respective iteration at least comprising the recording of an image.

2. A method in accordance with claim 1,
**characterized in that**
the camera (16) is arranged in a fixed position at the kinematic unit (14) with respect to a gripping region of the gripping apparatus (18), with in particular a detection zone of the camera (16) covering the gripping region of the gripping apparatus (18).

3. A method in accordance with one of the preceding claims,
**characterized in that**
the camera (16) is transferred to a predefined waiting position and the movement of the kinematic unit (14) is stopped in the waiting position if no object (22) has been identified during a predefined time period and/or within a predefined travel range.

4. A method in accordance with claim 3,
**characterized in that**
an image of the search zone (20) is repeatedly recorded in the waiting position until an image of an object (22) is identified.

5. A method in accordance with claim 4,
**characterized in that,**
in a preceding second calibration step, a second transformation function (T2) is determined for the waiting position on the basis of a reference image of the search zone (20), said second transformation function (T2) transforming the image coordinate system (B1, B2) of the non-equalized reference image directly into the world coordinate system (W); and
**in that** the position and location of an object (22) detected in the waiting position in the world coordinate system (W) is determined directly on the basis of the image of an identified object (22) in the image coordinate system (B1, B2) of a non-equalized image and on the basis of the second transformation function (T2).

6. A method in accordance with any one of the preceding claims,
**characterized in that**
the position of the object in the search zone (20) is determined in two dimensions within a surface, in particular a plane, which defines the search zone (20) and whose position and location within the world coordinate system (W) is determined or detected during the first calibration step.

7. A method in accordance with any one of the preceding claims,
**characterized in that**
the equalization of the image is additionally performed on the basis of distortions of an objective of the camera (16).

8. A method in accordance with any one of the preceding claims,
**characterized in that**
the robot (10) is a pick-and-place robot.

9. A positioning system at least for gripping objects (22) in a search zone (20), comprising a robot (10) calibrated in a world coordinate system (W), wherein the robot (10) comprises a kinematic unit (14), wherein a gripping apparatus (18) for gripping an object (22) and a camera (16) for capturing two-dimensional images at least of a part zone of the search zone (20) are arranged at the kinematic unit (14), wherein the search zone (20) has a plurality of markings (26) which define a search zone coordinate system (S) and which are provided to determine perspective distortions in an image of the search zone (20); and comprising a control unit (24) which is configured to activate the robot at least to grip objects in the search zone in accordance with the method in accordance with any one of the preceding claims.

## Revendications

1. Procédé pour saisir des objets (22) dans une zone de recherche (20) au moyen d'un robot (10) calibré dans un système de coordonnées universelles (W), dans lequel
le robot (10) comprend une cinématique (14),
un dispositif de préhension (18) pour saisir un objet (22) et une caméra (16) pour acquérir des images bidimensionnelles d'au moins une zone partielle de la zone de recherche (20) sont disposés sur la cinématique (14),
la zone de recherche (20) présente une pluralité de repères (26) qui définissent un système de coordonnées de zone de recherche (S) et qui sont prévus pour déterminer des distorsions de perspective dans une image de la zone de recherche (20),
dans une première étape de calibrage précédente, une première fonction de transformation (T1) est déterminée sur la base d'une image de référence de la zone de recherche (20), fonction qui transfère le système de coordonnées de zone de recherche (S) en le système de coordonnées universelles (W),
le procédé consistant à :
orienter la caméra (16) vers la zone de recherche (20),
enregistrer une image bidimensionnelle de la zone de recherche,
corriger la distorsion de l'image sur la base de repères (26) enregistrés dans l'image,
déterminer la position et l'emplacement d'une représentation d'un objet identifié (22), présente dans l'image corrigée, dans un système de coordonnées d'image (B1, B2),
déterminer la position et l'emplacement de l'objet (22) dans le système de coordonnées de zone de recherche (S) sur la base de la position et de l'emplacement de la représentation de l'objet (22) dans le système de coordonnées d'image (B1, B2) et sur la base des représentations des repères (26),
déterminer la position et l'emplacement de l'objet (22) dans le système de coordonnées universelles (W) sur la base de la position et de l'emplacement de l'objet (22) dans le système de coordonnées de zone de recherche (S) et sur la base de la première fonction de transformation (T1), et piloter la cinématique (14) pour déplacer le dispositif de préhension (18) jusque dans une position de préhension dans laquelle s'effectue une préhension de l'objet identifié (22) par le dispositif de préhension (18), sur la base de la position et de l'emplacement de l'objet (22) dans le système de coordonnées universelles (W),
dans lequel
l'une au moins des étapes consistant à enregistrer l'image, corriger la distorsion de l'image, déterminer la position et l'emplacement dans le système de coordonnés d'image, de zone de recherche et/ou de coordonnées universelles (B1, B2, S, W), est réalisée pendant un mouvement de la cinématique (14),
plusieurs itérations sont effectuées pendant le mouvement du dispositif de préhension (18), une itération respective comprenant au moins l'enregistrement d'une image.

2. Procédé selon la revendication 1,
**caractérisé en ce que**
la caméra (16) est disposée sur la cinématique (14) de manière fixe par rapport à une zone de préhension du dispositif de préhension (18), une zone d'acquisition de la caméra (16) comprenant en particulier la zone de préhension du dispositif de préhension (18).

3. Procédé selon l'une des revendications précédentes,
**caractérisé en ce que**
la caméra (16) est transférée vers une position d'attente prédéterminée et le mouvement de la cinématique (14) est arrêté dans la position d'attente si aucun objet (22) n'a été identifié pendant une période de temps prédéterminée et/ou au sein d'une plage de déplacement prédéterminée.

4. Procédé selon la revendication 3,
**caractérisé en ce que**
une image de la zone de recherche (20) est enregistrée de manière répétée dans la position d'attente, jusqu'à ce qu'une représentation d'un objet (22) soit identifiée.

5. Procédé selon la revendication 4,
**caractérisé en ce que**
une deuxième fonction de transformation (T2) est déterminée pour la position d'attente, dans une deuxième étape de calibrage précédente, sur la base d'une image de référence de la zone de recherche (20), ladite fonction transférant directement le système de coordonnées d'image (B1, B2) de l'image de référence non corrigée en le système de coordonnées universelles (W), et **en ce que**
la position et l'emplacement d'un objet (22) détecté dans la position d'attente dans le système de coordonnées universelles (W) sont déterminés directement sur la base de la représentation d'un objet identifié (22) dans le système de coordonnées d'image (B1, B2) d'une image non corrigée et sur la base de la deuxième fonction de transformation (T2).

6. Procédé selon l'une des revendications précédentes,
**caractérisé en ce que**
la position de l'objet dans la zone de recherche (20) est déterminée en deux dimensions à l'intérieur d'une surface, en particulier d'un plan, définissant la zone de recherche (20), dont la position et l'emplacement dans le système de coordonnées universelles (W) sont déterminés ou détectés pendant la première étape de calibrage.

7. Procédé selon l'une des revendications précédentes,
**caractérisé en ce que**
la correction de la distorsion de l'image est effectuée en supplément sur la base des distorsions d'un objectif de la caméra (16).

8. Procédé selon l'une des revendications précédentes,
**caractérisé en ce que**
le robot (10) est un robot d'équipement.

9. Système de positionnement au moins pour saisir des objets (22) dans une zone de recherche (20), comprenant un robot (10) calibré dans un système de coordonnées universelles (W),
dans lequel
le robot (10) comprend une cinématique (14),
un dispositif de préhension (18) pour saisir un objet (22) et une caméra (16) pour acquérir des images bidimensionnelles d'au moins une zone partielle de la zone de recherche (20) sont disposés sur la cinématique (14),
la zone de recherche (20) comprend plusieurs repères (26) qui définissent un système de coordonnées de zone de recherche (S) et qui sont prévus pour déterminer des distorsions de perspective dans une image de la zone de recherche (20),
et comprenant une unité de commande (24) qui est conçue pour piloter le robot au moins pour saisir des objets dans la zone de recherche par le procédé selon l'une des revendications précédentes.
